# EUROPÄISCHE PATENTSCHRIFT

(11) **EP 3 455 104 B1**
(45) Veröffentlichungstag und Bekanntmachung des Hinweises auf die Patenterteilung: **26.02.2020**
(21) Anmeldenummer: 17728156.5
(22) Anmeldetag: 01.06.2017
(51) Int. Cl.: B60R 11/04, B60R 11/00, G03B 11/04, G03B 17/56, H04N 5/225

(54) **VORRICHTUNG MIT EINER KAMERAEINHEIT UND EINEM ABDECKELEMENT**
DEVICE HAVING A CAMERA UNIT AND A COVER ELEMENT
DISPOSITIF COMPRENANT UNE UNITÉ CAMÉRA ET UN ÉLÉMENT DE RECOUVREMENT

(30) Priorität: 20.07.2016 DE 102016113410
(43) Veröffentlichungstag der Anmeldung: 20.03.2019
(73) Patentinhaber: Huf Hülsbeck & Fürst GmbH & Co. KG, 42551 Velbert (DE)
(72) Erfinder: BARTHEL, Joachim, 45329 Essen (DE)
(74) Vertreter: Zenz Patentanwälte Partnerschaft mbB
(86) Internationale Anmeldenummer: PCT/EP2017/063265
(87) Internationale Veröffentlichungsnummer: WO 2018/015058

(56) Entgegenhaltungen:
- WO-A1-2016/177577
- DE-A1-102007 052 402
- DE-A1-102010 060 573
- DE-A1-102012 109 610
- DE-A1-102016 014 844

## Beschreibung

Die Erfindung richtet sich auf eine Vorrichtung mit einer Kameraeinheit mit einem Objektiv zur Bilderfassung des Außenbereiches eines Kraftfahrzeugs, einem Gehäuse, welches wenigstens eine Öffnung für die Kameraeinheit aufweist und in welchem die Kameraeinheit untergebracht ist, einem Abdeckelement zum Verschließen der Öffnung in dem Gehäuse, einer Antriebseinheit, die zur Bewegung der Kameraeinheit zwischen einer Ruheposition und einer Betriebsposition und zur Bewegung des Abdeckelements zwischen einer Schließstellung und einer Offenstellung ausgebildet ist, wobei in der Schließstellung des Abdeckelements die Kameraeinheit in der Ruheposition von außen unzugänglich innerhalb des Gehäuses und hinter dem Abdeckelement angeordnet ist und in der Offenstellung des Abdeckelements die Kameraeinheit in der Betriebsposition angeordnet ist, wobei ein Schwenkelement bewegbar um eine erste Drehachse gelagert ist und einen ersten Arm, welcher mit dem Abdeckelement bewegungsverbunden ist, und einen zweiten Arm aufweist, und wobei ein um eine zweite Drehachse bewegbar gelagertes Hebelelement mit dem Abdeckelement in Wirkverbindung steht, um die Bewegung des Abdeckelements zu unterstützen.

Vorrichtungen mit einer Kameraeinheit, die zur Bilderfassung des Außenbereiches eines Kraftfahrzeugs dienen, sind aus dem Stand der Technik bereits bekannt. Derartige Vorrichtungen umfassen eine Kameraeinheit, die in einem Gehäuse der Kameraeinheit zwischen einer Ruheposition und einer Betriebsposition beweglich aufgenommen ist. Beispielsweise können derartige Kameraeinheiten im Bereich des assistierten Einparkens von Kraftfahrzeugen zum Einsatz kommen. Wird beispielsweise der Rückwärtsgang des Kraftfahrzeugs eingelegt, verfährt die Kameraeinheit von der Ruheposition in die Betriebsposition, wobei die Kameraeinheit wenigstens teilweise aus dem Gehäuse herausgefahren wird. Dadurch wird der Bereich hinter dem Kraftfahrzeug durch die Kameraeinheit bildlich erfasst und auf einem Display für den Fahrer des Kraftfahrzeugs angezeigt. Ist die Rückwärtsfahrt beendet und nimmt der Fahrer des Kraftfahrzeugs den Rückwärtsgang wieder heraus, wird die Kameraeinheit von der Betriebsposition wieder zurück in die Ruheposition bewegt.

Um die Kameraeinheit zumindest in der Ruheposition vor Verunreinigungen zu schützen, ist ein Abdeckelement vorgesehen, durch welches die Öffnung, durch die die Kameraeinheit aus dem Gehäuse herausfährt, in der Ruheposition verschlossen werden kann. Folglich muss beim Übergang von der Ruheposition in die Betriebsposition der Kameraeinheit das Abdeckelement zugleich zwischen einer Schließstellung und einer Offenstellung bewegt werden.

Eine Vorrichtung der eingangs bezeichneten Art ist zum Beispiel aus der DE 10 2010 060 573 A1 bekannt. Bei dieser bekannten Vorrichtung ist eine Kameraeinheit in einem Gehäuse mittels eines Schlittenelements bewegbar untergebracht, an welchem die Kameraeinheit befestigt ist. Eine Antriebseinheit bewegt dabei die Kameraeinheit über einen Mechanismus, welcher ein Schwenkelement und ein Hebelelement umfasst. Das Schwenkelement ist L-förmig ausgebildet und um eine zentrale Drehachse drehbar, wobei ein erstes Längsende des Schwenkelements gelenkig mit dem Abdeckelement verbunden ist, wohingegen das zweite Längsende des Schwenkelements ein Langloch aufweist, an welchem die Kameraeinheit gelagert ist. Das Hebelelement ist an einer weiteren Drehachse gelagert und ist gelenkig mit dem Abdeckelement verbunden, um die Bewegung des Abdeckelements zu führen.

Ferner ist aus der DE 10 2007 052 402 eine Vorrichtung mit einer Kameraeinheit bekannt, die zur Bilderfassung des Außenbereiches eines Kraftfahrzeugs dient. Die Bewegung der Kameraeinheit und die relativ zu der Kameraeinheit erfolgende Bewegung des Abdeckelements umfassen mehrere Bewegungsschritte, so dass eine komplexe kinematische Ansteuerung des Abdeckelementes erforderlich ist. Insbesondere erfordert die hierin offenbarte Vorrichtung zur Bewegung der Kameraeinheit und des Abdeckelementes einen erheblichen Bauraum.

Eine weitere Vorrichtung zur Bilderfassung gemäß dem Oberbegriff des Anspruchs 1 ist aus dem Dokument DE 10 2012 109 610 bekannt. Vor diesem Stand der Technik liegt der Erfindung die Aufgabe zugrunde eine Lösung zu schaffen, die auf konstruktiv einfache Weise und kostengünstig eine Vorrichtung mit einer Kameraeinheit und einem Deckelelement bereitstellt, die einen geringen Bauraum benötigt und die sich gleichzeitig durch einen gering gehaltenen Bewegungsweg für Kameraeinheit und Abdeckelement auszeichnet, wodurch die Zeitspanne für geringgehalten werden kann, um die Kameraeinheit in ihre Betriebsposition zu bewegen.

Bei einer Vorrichtung der eingangs bezeichneten Art wird die Aufgabe erfindungsgemäß dadurch gelöst, dass ein um eine dritte Drehachse gelagertes Führungselement einen ersten Führungsarm, der mit dem zweiten Arm des Schwenkelements in Wirkverbindung steht, und einen zweiten Führungsarm, der mit der Kameraeinheit bewegungsgekoppelt ist, aufweist, wobei zur Bewegung der Kameraeinheit und zur Bewegung des Abdeckelements die Antriebseinheit an der mit dem zweiten Führungsarm bewegungsgekoppelten Kameraeinheit angreift.

Vorteilhafte und zweckmäßige Ausgestaltungen und Weiterbildungen der Erfindung ergeben sich aus den Unteransprüchen.

Durch die Erfindung wird eine Vorrichtung mit einer Kameraeinheit zur Bilderfassung des Außenbereiches eines Kraftfahrzeugs zur Verfügung gestellt, die sich durch eine funktionsgerechte Konstruktion auszeichnet und einen kostengünstigen Aufbau aufweist. Erfindungsgemäß bewegt die Antriebseinheit die Kameraeinheit, wobei das hebelartig ausgebildete und mit der Kameraeinheit bewegungsgekoppelt Führungselement die Bewegung der Kameraeinheit auf das Schwenkelement überträgt, so dass gleichzeitig mit der Bewegung der Kameraeinheit auch das Abdeckelement bewegt wird, wobei nur die eine Antriebseinheit für die beiden Bewegungen der Kameraeinheit und des Abdeckelements erforderlich ist. Die Bewegung der Kameraeinheit aus ihrer Ruheposition in die Betriebsposition verläuft nahezu linear, obgleich kein Schlittenelement wie im Stand der Technik, sondern lediglich ein hebelartiger Mechanismus verwendet wird. Die lineare Bewegung der Kameraeinheit zwischen der Ruheposition und der Betriebsposition bewirkt eine kompakte Bewegungsbahn auf engstem Raume. Folglich kann durch die Erfindung der Platz zur Aufnahme der Kameraeinheit auf ein Mindestmaß reduziert werden, wobei die Vorrichtung einen einfachen Aufbau mit wenig Bauraum aufweist. Aufgrund der kompakten Bewegungsbahn der Kameraeinheit bei ihrer Bewegung zwischen der Ruheposition und der Betriebsposition kann durch die Erfindung die Zeitspanne für das Ausfahren der Kameraeinheit auf ein Mindestmaß reduziert werden.

Die Erfindung sieht in Ausgestaltung vor, dass ein Kopplungselement den ersten Führungsarm des Führungselements und den zweiten Arm des Schwenkelements gelenkig miteinander verbindet. Die gelenkige Verbindung erlaubt es, dass sich sowohl das Führungselement als auch das Schwenkelement um ihre jeweilige Drehachse großzügig drehen bzw. schwenken können, der Bauraum für die erfindungsgemäße Vorrichtung jedoch durch das Kopplungselement geringgehalten werden kann.

Um im Fall eines Fahrzeugunfalls zu vermeiden, dass die bei dem Unfall wirkenden Beschleunigungskräfte die Kameraeinheit in die Betriebsposition bewegen, sieht die Erfindung vor, dass in der Ruheposition der Kameraeinheit das Kopplungselement fluchtend zu dem Führungselement ausgerichtet ist. Durch diese Anordnung ist sichergestellt, dass keine Hebelkraft auf das Führungselement und das Kopplungselement wirken kann, so dass allein die fluchtende Anordnung von Führungselement und Kopplungselement eine Art Crashsperre darstellt.

Zur Sicherstellung, dass die Kameraeinheit bei ihrer Bewegung zwischen der Ruheposition und der Betriebsposition auch einen linearen Weg beschreitet, ist in weiterer Ausgestaltung der Erfindung vorgesehen, dass ein Bewegungshebel um eine vierte Drehachse bewegbar gelagert ist und mit der Kameraeinheit in Wirkverbindung steht, um die Bewegung der Kameraeinheit zu unterstützen. Auf diese Weise wird ein geringer Bauraum für die erfindungsgemäße Vorrichtung benötigt.

Ebenfalls im Hinblick auf eine kompakte Bauweise der Vorrichtung sieht die Erfindung in weiterer Ausgestaltung vor, dass die erste Drehachse und die zweite Drehachse mit Bezug auf die Bewegungsrichtung der Kameraeinheit zwischen der dritten Drehachse und der vierten Drehachse angeordnet sind.

Hinsichtlich eines geringen Bauvolumens und folglich einer linearen Bewegung der Kameraeinheit ist in Ausgestaltung der erfindungsgemäßen Vorrichtung vorgesehen, dass der zweite Führungsarm hebelförmig ausgebildet ist, wobei der Bewegungshebel und der zweite Führungsarm gleich ausgerichtet sind und parallel zueinander verlaufen.

Das Abdeckelement kann ein Hersteller-Emblem aufweisen, welches nach Möglichkeit sowohl in der Schließstellung als auch in der Offenstellung immer gut sichtbar sein sollte. Folglich sollte das Abdeckelement mehr oder weniger immer parallel zur anliegenden Fahrzeugkarosserie ausgerichtet sein. Zu diesem Zweck sieht die Erfindung in weiterer Ausgestaltung vor, dass der erste Arm einen ersten Gelenkpunkt an dem Abdeckelement aufweist und das Hebelelement einen zweiten Gelenkpunkt an dem Abdeckelement aufweist, wobei der Abstand zwischen der ersten Drehachse und der zweiten Drehachse dem Abstand zwischen dem ersten Gelenkpunkt und dem zweiten Gelenkpunkt entspricht.

Die Erfindung sieht für die erfindungsgemäße Vorrichtung in weiterer Ausgestaltung vor, dass der Abstand der vierten Drehachse zu dem Abdeckelement kleiner ist als der Abstand der dritten Drehachse zu dem Abdeckelement. Die vierte Drehachse und damit das Hebelelement sind folglich zwischen dem Abdeckelement und der dritten Drehachse, welche das Führungselement lagert, angeordnet.

Für eine besonders kompakte Anordnung sieht die Erfindung in Ausgestaltung vor, dass der erste Arm in Bezug auf den zweiten Arm abgewinkelt verlaufend ausgebildet ist. Obgleich die erste Drehachse in Bezug auf das Abdeckelement hinter der vierten Drehachse angeordnet ist, erlaubt die abgewinkelte Ausführung des Schwenkelements eine Verbindung zu dem Abdeckelement.

Damit das Abdeckelement nicht wackelt, sondern sicher gehalten ist, sieht die Erfindung in weiterer Ausgestaltung vor, dass das Schwenkelement einen dritten Arm aufweist, der zu dem ersten Arm parallel versetzt an der ersten Drehachse gelagert ist und der mit dem Abdeckelement bewegungsverbunden ist.

Die kompakte Bauweise der erfindungsgemäßen Vorrichtung ist in weiterer Ausgestaltung dadurch charakterisiert, dass das Hebelelement zwischen dem ersten Arm und dem dritten Arm des Schwenkelements derart angeordnet ist, dass der erste Arm, der dritte Arm und das Hebelelement das Abdeckelement an drei Gelenkpunkten lagern. Die Lagerung über drei Gelenkpunkte verhindert darüber hinaus, dass das Abdeckelement wackelt oder verkippt.

Die Erfindung sieht in weiterer Ausgestaltung vor, dass eine sich entlang einer in dem Gehäuse untergebrachten Spindel bewegende Spindelmutter an der Kameraeinheit fixiert ist, wobei die Antriebseinheit die Spindel antreibt und rotiert. Durch die Bewegung der Spindelmutter wird folglich die Kameraeinheit entlang oder zumindest in axialer Richtung der Spindel auf einem linearen Weg bewegt.

Um eine Anpassung der Antriebseinheit zu vermeiden, ist es von Vorteil, wenn die Spindel und/oder die Spindelmutter aus einem Kunststoff bestehen. Vorzugsweise wird aufgrund seiner vorteilhaften Eigenschaften ein thermoplastischer Kunststoff verwendet. Somit kann mit Hilfe einer kostengünstigen Herstellung eine Spindel und/oder eine Spindelmutter mit einer an das System der Vorrichtung angepassten Steigung hergestellt werden. Beispielsweise kann mit einer größeren Steigung das Aus- und Einfahren der Kameraeinheit zeitlich beschleunigt werden, ohne dass dafür eine stärkere Antriebseinheit verwendet werden muss.

Um die Funktionalität der Vorrichtung zu erhöhen, sieht die Erfindung in weiterer Ausgestaltung vor, dass das Abdeckelement nach Art eines Kurzhubtasters ausgebildet ist. Folglich weist das Abdeckelement eine Grundplatte auf, auf welcher zum Beispiel ein Mikroschalter angebracht ist, der durch Drücken eines über dem Mikroschalter liegenden und federnd auf der Grundplatte abgestützten Tasters betätigbar ist, um beispielsweise eine Entriegelung oder Öffnung einer Kofferraumklappe zu bewirken.

Zweckdienlich ist es in Ausgestaltung der Vorrichtung, wenn die Drehpunkte an dem Gehäuse ortsfest gelagert sind. Diesbezüglich sei angemerkt, dass im Sinne der Erfindung unter einem Gehäuse auch eine Trägerbaugruppe, in oder an welcher die erfindungsgemäße Vorrichtung mit Kameraeinheit, Abdeckelement und Bewegungsmechanik aufgenommen ist und die in der Fahrzeugkarosserie eingebaut werden kann, als auch eine Einbuchtung in der Fahrzeugkarosserie, in welcher die erfindungsgemäße Vorrichtung mit Kameraeinheit, Abdeckelement und Bewegungsmechanik eingesetzt und montiert werden kann, zu verstehen ist. Die Aufgabe des Gehäuses erschöpft sich in der Funktion, die Vorrichtung mit Kameraeinheit, Abdeckelement und Bewegungsmechanik aufzunehmen.

Ebenso sind im Sinne der Erfindung unter einer Drehachse und einem Gelenkpunkt Verbindungs- bzw. Lagerungsbereiche zu verstehen, um die sich etwas, was daran gelagert ist, drehen kann. Dabei muss es keine Achse im Sinne eines stangenförmigen Elements oder einer angetriebenen Stange sein. Es kann sich bei den Drehachsen und Gelenkpunkten der vorliegenden Erfindung sogar auch um Drehpunkte und Gelenkachsen handeln, an denen ein Element punktuell drehbar gelagert bzw. angebracht ist.

Ferner kann es sich bei dem Bewegungshebel sowie dem Führungselement der vorliegenden Erfindung um hebelartige Arme handeln, die bei punktueller Anbringung nur auf einer Seite der Kameraeinheit angebracht sind und sich dort erstrecken. Andererseits soll die vorliegende Erfindung nicht auf dieses Verständnis beschränkt sein, denn es kann sich bei dem Bewegungshebel und dem Führungselement um zweiarmige bzw. doppelarmige Elemente handeln, die beidseitig der Kameraeinheit angeordnet sind und parallel zueinander verlaufen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 ein schematisch dargestelltes Kraftfahrzeug mit einer exemplarisch angedeuteten erfindungsgemäßen Vorrichtung,
Figur 2 eine perspektivische Darstellung einer erfindungsgemäßen Vorrichtung, bei welcher ein Abdeckelement in einer Schließstellung angeordnet ist,
Figur 3 eine perspektivische Darstellung der erfindungsgemäßen Vorrichtung, bei welcher das Abdeckelement in einer Offenstellung und eine Kameraeinheit in einer Betriebsstellung angeordnet sind,
Figur 4 eine weitere Perspektivansicht auf die in den Figuren 2 und 3 gezeigte Vorrichtung, wobei ein Gehäuse der Vorrichtung nicht dargestellt ist,
Figur 5 eine perspektivische Einzelteildarstellung der in Figur 4 gezeigten Vorrichtung,
Figur 6 eine Draufsicht auf die in Figur 4 gezeigte erfindungsgemäße Vorrichtung,
Figur 7 eine seitliche Ansicht auf die erfindungsgemäße Vorrichtung, bei welcher die Kameraeinheit in einer Ruhestellung angeordnet ist, und
Figur 8 eine seitliche Ansicht auf die erfindungsgemäße Vorrichtung, bei welcher die Kameraeinheit in der Betriebsposition angeordnet ist.

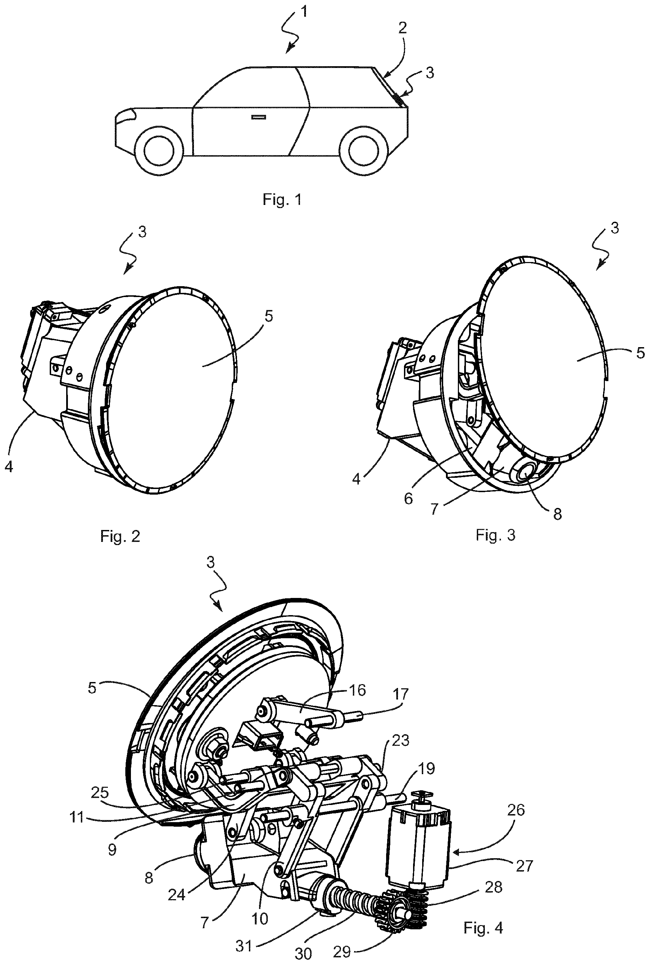

Figur 1 zeigt eine Seitenansicht eines Kraftfahrzeugs 1, welches an seinem Heck 2 (alternativ auch an seiner Stoßstange) eine schematisch dargestellte Vorrichtung 3 gemäß Anspruch 1 der vorliegenden Erfindung aufweist. Die Vorrichtung 3 dient zur bildlichen Erfassung des Außenbereichs des Kraftfahrzeugs 1.

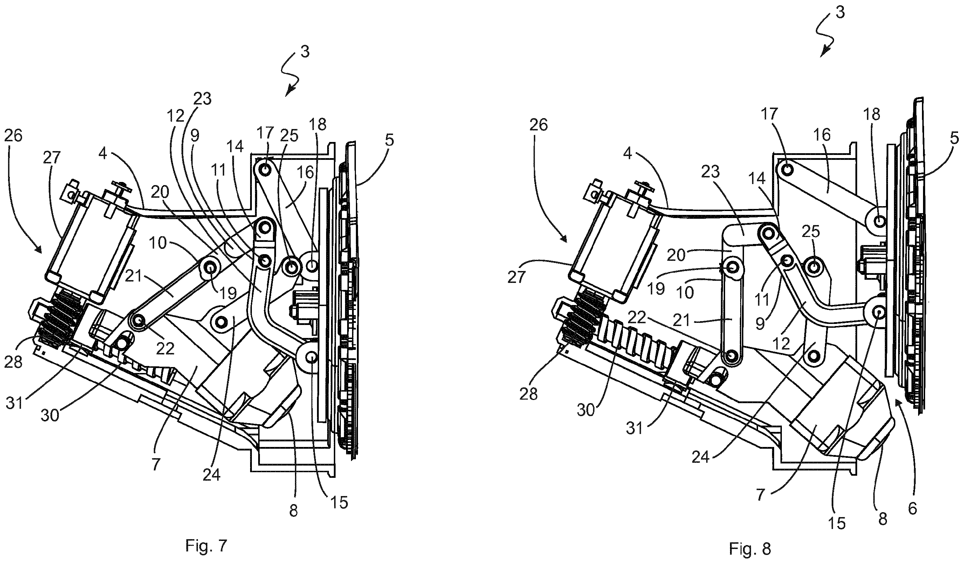

In den Figuren 2 und 3 ist die Vorrichtung 3 in perspektivischen Ansichten dargestellt, wobei in Figur 2 ein Gehäuse 4 der Vorrichtung 3 gezeigt ist, welches stirnseitig von einem zur Vorrichtung 3 gehörenden Abdeckelement 5 verschlossen ist. Das Abdeckelement 5 befindet sich bei der in Figur 2 gezeigten Anordnung in seiner Schließstellung (siehe auch Figur 7, welche eine seitliche Schnittansicht der Vorrichtung 3 zeigt). In Figur 3 ist das Abdeckelement 5 hingegen in einer Offenstellung angeordnet, in welcher das Abdeckelement 5 eine stirnseitig in dem Gehäuse 4 ausgebildete Öffnung 6 zumindest zum Teil freigibt (siehe hierzu auch Figur 8, in welcher eine seitliche Schnittansicht der Vorrichtung 3 dargestellt ist). In der Offenstellung des Abdeckelements 5 ragt eine Kameraeinheit 7 der Vorrichtung 3 aus der Öffnung 6 hervor. Genauer gesagt ist die Kameraeinheit 7 in der Offenstellung des Abdeckelement 5 in einer Betriebsposition angeordnet, in welcher ein Objektiv 8 der Kameraeinheit 7 den Außenbereich des Kraftfahrzeugs 1 erfassen kann. In der Figur 2 befindet sich die Kameraeinheit 7 in einer in das Gehäuse 4 zurückgezogenen Ruheposition und ist von dem Abdeckelement 5 abgedeckt und gegenüber Umwelteinflüssen wie Regen, Staub, Sonneneinstrahlung, Schmutz und auch vor einem möglichen Diebstahl geschützt angeordnet. Bei der Vorrichtung 3 gemäß der vorliegenden Erfindung ist die Bewegung von Kameraeinheit 7 und Abdeckelement 5 gekoppelt, so dass in der Schließstellung des Abdeckelements 5 die Kameraeinheit 7 in der Ruheposition von außen unzugänglich innerhalb des Gehäuses 4 und hinter dem Abdeckelement 5 angeordnet ist, wohingegen in der Offenstellung des Abdeckelements 5 die Kameraeinheit 7 in der Betriebsposition angeordnet ist. Die Bewegung des Abdeckelements 5 erfolgt mit dem gleichen Mechanismus, der die Kameraeinheit 7 bewegt.

In den Figuren 4 bis 6 ist das Gehäuse 4 für die Vorrichtung 3 nicht dargestellt und in den Figuren 7 und 8 zum Teil weggeschnitten, um einen besseren Blick auf einen Mechanismus zur Bewegung von Abdeckelement 5 und Kameraeinheit 7 zu erlangen. Zur gleichzeitigen Bewegung der Kameraeinheit 7 und des Abdeckelements 5 weist die Mechanik der Vorrichtung 3 ein Schwenkelement 9, ein mit dem Schwenkelement 9 gekoppeltes Führungselement 10 und ein Hebelelement 16 auf. Wie insbesondere aus den Figuren 7 und 8 ersichtlich ist, ist das Schwenkelement 9 drehbar um eine erste Drehachse 11 gelagert, wobei das Schwenkelement 9 einen ersten Arm 12 und einen zweiten Arm 14 aufweist. Der erste Arm 12 erstreckt sich von der Drehachse 11 aus und ist abgewinkelt ausgebildet, wobei sein Längsende an einem Gelenkpunkt 15 mit dem Abdeckelement 5 drehbar verbunden ist. Das stangenförmig ausgebildete Hebelelement 16 ist mit einem seiner beiden Längsenden an einer zweiten Drehachse 17 drehbar gelagert, wohingegen das andere Längsende an einem weiteren Gelenkpunkt 18 mit dem Abdeckelement 5 drehbar verbunden ist. Ferner ist das Führungselement 10 um eine dritte Drehachse 19 drehbar gelagert und weist einen ersten Führungsarm 20 und einen sich zu dem ersten Führungsarm 20 fluchtend erstreckenden zweiten Führungsarm 21 auf. Der zweite Führungsarm 21 ist über einen Gelenkpunkt 22 mit der Kameraeinheit 7 bewegungsgekoppelt, wie nachstehend noch beschrieben ist. Ferner weist die Vorrichtung 3 ein stangenförmig ausgebildetes Kopplungselement 23 auf, welches den ersten Führungsarm 20 des Führungselements 10 und den zweiten Arm 14 des Schwenkelements 9 gelenkig miteinander verbindet. Der erste Führungsarm 20 steht folglich mit dem zweiten Arm 14 des Schwenkelements 9 mittels des Kopplungselements 23 in Wirkverbindung. Die Vorrichtung 3 umfasst ferner einen Bewegungshebel 24, welcher um eine vierte Drehachse 25 bewegbar gelagert ist und mit der Kameraeinheit 7 in Wirkverbindung steht.

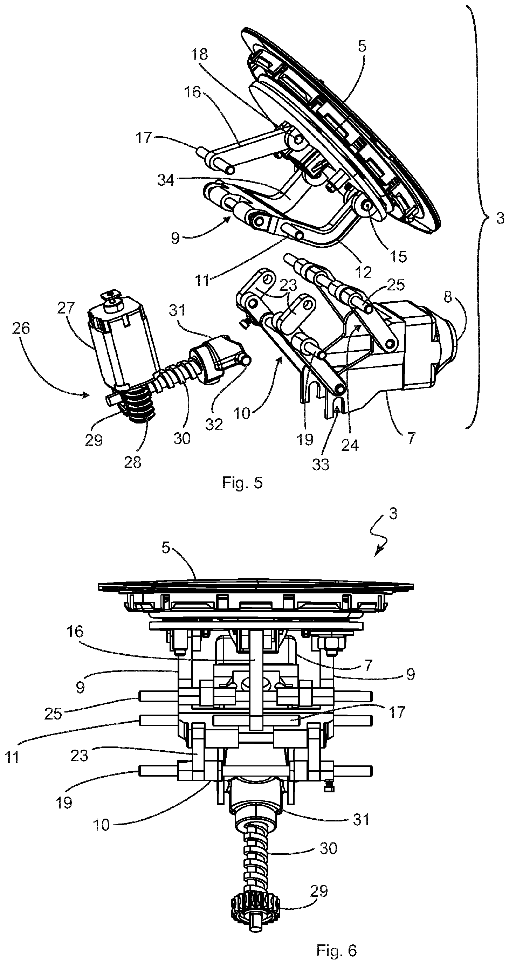

Die erfindungsgemäße Vorrichtung 3 umfasst ferner eine Antriebseinheit 26, die zur Bewegung der Kameraeinheit zwischen der Ruheposition und der Betriebsposition dient und die innerhalb des Gehäuses 4 untergebracht ist. Zu der Antriebseinheit 26 zählt ein Motor bzw. ein Drehmotor 27 mit einer Abtriebswelle 28, die mit einem Zahnrad 29 kämmt, welches drehfest auf einer Spindel 30 befestigt ist. Mit der Kameraeinheit 7 ist eine Spindelmutter 31 gekoppelt, wobei seitliche Zapfen 32 am Kopf der Spindelmutter 31 in entsprechende Ausnehmungen 33 an dem Gehäuse der Kameraeinheit 7 eingreifen (siehe zum Beispiel Figur 5). Die Spindelmutter 31 bewegt sich bei Inbetriebnahme des Drehmotors 27 entlang der in dem Gehäuse 4 untergebrachten Spindel 30, wobei sich die Spindelmutter 31 je nach Drehrichtung des Drehmotors 27 entweder in Richtung des Abdeckelements 5 bewegt (Kameraeinheit 7 wird aus der Ruheposition in die Betriebsposition bewegt) oder von dem Abdeckelement 5 wegbewegt (Kameraeinheit 7 wird aus der Betriebsposition in die Ruheposition bewegt). Dabei ist die Spindel 30 und/oder die Spindelmutter 31 erfindungsgemäß aus einem Kunststoff hergestellt, was beispielsweise in einem bekannten Spritzgussverfahren erfolgen kann. Durch das Herstellungsverfahren ist es möglich, die Steigung der Spindel 30 an die gewünschten Randbedingungen (zum Beispiel die Geschwindigkeit, mit welcher die Kameraeinheit 7 in ihre Betriebsposition bewegt wird) der Vorrichtung 3 anzupassen. Wenn die in ihrer Ruheposition angeordnete Kameraeinheit 7 in Betrieb genommen werden soll, wird der Drehmotor 27 gestartet. Der Drehmotor 27 rotiert über die Abtriebswelle 28 und über das Zahnrad 29 die Spindel 30, so dass sich die Spindelmutter 31 in Richtung des Abdeckelements 5 entlang der Spindel 30 bewegt. Die Spindelmutter 31 drängt dabei die Kameraeinheit 7 ebenfalls in Richtung des Abdeckelements 5, wodurch sich das hebelartige Führungselement 10 entgegen dem Uhrzeigersinn um die dritte Drehachse 19 dreht. Dabei zieht der erste Führungsarm 20 das Kopplungselement 23 in eine von dem Abdeckelement 5 wegweisende Richtung, wodurch das Schwenkelement 9 auch um die erste Drehachse 11 entgegen dem Uhrzeigersinn dreht, so dass der erste Arm 12 des Schwenkelement 9 gegen das Abdeckelement 5 drückt und dieses nach außen und von der ersten Drehachse 11 wegbewegt. Die vorstehend beschriebene Bewegung des Abdeckelements 5 aus der Schließstellung in die Offenstellung wird dabei von dem Hebelelement 16 unterstützt, wobei das Hebelelement 16 selbst nicht kraftverbunden mit der Antriebseinheit 26 ist. Auch der Bewegungshebel 24 ist nicht mit der Antriebseinheit 26 kraft- und wirkverbunden. Der Bewegungshebel dient lediglich dazu, die Bewegung der Kameraeinheit 7 zu unterstützen. Nur das Schwenkelement 9 ist über das Kopplungselement 23 und das Führungselement 10 mit der Antriebseinheit 26 kraft- und wirkverbunden, wobei eine Bewegung der Kameraeinheit 7 eine Bewegung des Abdeckelements 5 bewirkt, denn zur Bewegung der Kameraeinheit 7 und zur Bewegung des Abdeckelements 5 greift die Antriebseinheit 26 an der mit dem zweiten Führungsarm 21 bewegungsgekoppelten Kameraeinheit 7 an.

Das Abdeckelement 5 kann ein Fahrzeug-Emblem tragen. Damit ein solches Emblem jederzeit gut sichtbar ist, muss das Abdeckelement 5 mehr oder weniger parallel zu der Fahrzeugkarosserie ausgerichtet sein, unabhängig davon, ob das Abdeckelement 5 in der Schließstellung (siehe Figur 7) oder in der Offenstellung (siehe Figur 8) angeordnet ist. Um diese Ausrichtung zu realisieren, entspricht der Abstand zwischen der ersten Drehachse 11 und der zweiten Drehachse 17 dem Abstand zwischen dem ersten Gelenkpunkt 15 und dem zweiten Gelenkpunkt 18.

Die vier Drehachsen 11, 17, 19 und 25 sind an dem Gehäuse 4 ortsfest gelagert. Wie insbesondere aus den Figuren 7 und 8 zu erkennen ist, sind in einem seitlichen Schnitt betrachtet die erste Drehachse 11 und die zweite Drehachse 17 mit Bezug auf die Bewegungsrichtung der Kameraeinheit 7 zwischen der dritten Drehachse 19 und der vierten Drehachse 25 angeordnet. Dabei ist der Abstand der vierten Drehachse 25 zu dem Abdeckelement 5 kleiner als der Abstand der dritten Drehachse 19 zu dem Abdeckelement 5. Mit anderen Worten ist die vierte Drehachse 25 und damit der Bewegungshebel 24 näher an dem Abdeckelement 5 angeordnet als die dritte Drehachse 19 mit dem Führungselement 10. Wie für die erfindungsgemäße Vorrichtung 3 des Weiteren charakteristisch ist, ist der zweite Führungsarm 21 hebelförmig bzw. stangenförmig ausgebildet, wobei der Bewegungshebel 24 und der zweite Führungsarm 21 gleich ausgerichtet und parallel zueinander verlaufend angeordnet und ausgebildet sind.

Wie Figur 7 zu entnehmen ist, ist in der Ruheposition der Kameraeinheit 7 und in der Schließstellung des Abdeckelements 5 das Kopplungselement 23 fluchtend zu dem Führungselement 10 ausgerichtet. Dadurch weist die Vorrichtung 3 die Eigenschaft einer Crashsperre auf, denn es kann keine Hebelkraft an dem Führungselement 10 angreifen, welches dafür sorgen könnte, die Kameraeinheit 7 aus der Ruheposition in die Betriebsposition und damit das Abdeckelement 5 in die Offenstellung zu bewegen.

Grundsätzlich ist die vorstehende Anordnung aus Schwenkelement 9, Führungselement 10 und Bewegungshebel 24 als eine einarmige Hebelkonfiguration denkbar, wie sie in den seitlichen Schnittdarstellungen der Figuren 7 und 8 gezeigt ist. Um jedoch die Stabilität und Robustheit der Vorrichtung 3 zu erhöhen, sind das Schwenkelement 9, das Führungselement 10 und der Bewegungshebel 24 als jeweilige Paare ausgeführt. Dies bedeutet, dass in der in den Figuren 7 und 8 gezeigten darstellen ein weiteres Schwenkelement 9, ein weiteres Führungselement 10 und ein weiterer Bewegungshebel 24 deckungsgleich, aber parallel in Richtung der Breite der Kameraeinheit 7 befindet, was insbesondere aus den Darstellungen der Figuren 5 und 6 ersichtlich ist. Dementsprechend weist beispielsweise das Schwenkelement 9 einen dritten Arm 34 auf (siehe zum Beispiel Figur 5), der zu dem ersten Arm 12 parallel versetzt an der ersten Drehachse 11 gelagert ist und der mit dem Abdeckelement 5 bewegungsverbunden ist. Auf diese Weise ist das Hebelelement 16 zwischen dem ersten Arm 12 und dem dritten Arm 34 des Schwenkelements 9 derart angeordnet (siehe Figuren 5 und 6), dass der erste Arm 12, der dritte Arm 34 und das Hebelelement 16 das Abdeckelement 5 an drei Gelenkpunkten lagern und damit ein Wackeln oder Verkippen des Abdeckelements 5 sicher verhindern.

Zur Erhöhung der Funktionalität der erfindungsgemäßen Vorrichtung 3 kann das Abdeckelement 5 nach Art eines Kurzhubtasters ausgebildet sein. Ein solches Abdeckelement 5 ist zum Beispiel aus der DE 10 2010 061 455 A1 bekannt, worauf an dieser Stelle verwiesen sei. Das Abdeckelement 5 nach Art eines Kurzhubtasters weist eine Grundplatte auf, auf welcher zum Beispiel ein Mikroschalter angebracht ist, der durch Drücken eines über dem Mikroschalter liegenden und federnd auf der Grundplatte abgestützten Tasters betätigt wird, um beispielsweise eine Kofferraumklappe zu entriegeln oder zu öffnen.

Zusammenfassend weist die erfindungsgemäße Vorrichtung 3 die Kameraeinheit 7 mit einem Objektiv 8 zur Bilderfassung des Außenbereiches des Kraftfahrzeugs 1, das Gehäuse 4, welches die Öffnung 6 für die Kameraeinheit 7 aufweist und in welchem die Kameraeinheit 7 untergebracht ist, das Abdeckelement 5 zum Verschließen der Öffnung 6 in dem Gehäuse 4, und die Antriebseinheit 26, die zur Bewegung der Kameraeinheit 7 zwischen der Ruheposition und der Betriebsposition und zur Bewegung des Abdeckelements 5 zwischen der Schließstellung und der Offenstellung ausgebildet ist, auf. In der Schließstellung des Abdeckelements 5 ist die Kameraeinheit 7 in der Ruheposition von außen unzugänglich innerhalb des Gehäuses 4 und hinter dem Abdeckelement 5 angeordnet und in der Offenstellung des Abdeckelements 5 ist die Kameraeinheit 7 in der Betriebsposition angeordnet. Das Schwenkelement 9 ist ferner bewegbar um die erste Drehachse 11 gelagert und weist den ersten Arm 12, welcher mit dem Abdeckelement 5 bewegungsverbunden ist, und den zweiten Arm 14 auf. Das um die zweite Drehachse 17 bewegbar gelagerte Hebelelement 16 steht mit dem Abdeckelement 5 in Wirkverbindung, um die Bewegung des Abdeckelements 5 zu unterstützen. Das um die dritte Drehachse 19 gelagerte Führungselement 10 umfasst den ersten Führungsarm 20, der mit dem zweiten Arm 14 des Schwenkelements 9 in Wirkverbindung steht, und den zweiten Führungsarm 21, der mit der Kameraeinheit 7 bewegungsgekoppelt ist. Kennzeichnend für die Erfindung ist es, dass zur Bewegung der Kameraeinheit 7 und zur Bewegung des Abdeckelements 5 die Antriebseinheit 26 an der mit dem zweiten Führungsarm 21 bewegungsgekoppelten Kameraeinheit 7 angreift. Die Antriebseinheit 26 bewegt folglich die Kameraeinheit 7 zwischen der Ruheposition und der Betriebsposition, wobei das Abdeckelement 5 über das Schwenkelement 9 und das Führungselement 10 mit der Bewegung der Kameraeinheit 7 bewegungsgekoppelt ist, d.h. wenn die Kameraeinheit 7 in der Ruheposition angeordnet ist, dann ist das Abdeckelement 5 in der Schließstellung angeordnet, wohingegen das Abdeckelement 5 in der Offenstellung angeordnet ist, wenn die durch die Antriebseinheit 26 bewegte Kameraeinheit 7 in der Betriebsstellung angeordnet ist.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist.

## Patentansprüche

1. Vorrichtung (3) mit
einer Kameraeinheit (7) mit einem Objektiv (8) zur Bilderfassung des Außenbereiches eines Kraftfahrzeugs (1),
einem Gehäuse (4), welches wenigstens eine Öffnung (6) für die Kameraeinheit (7) aufweist und in welchem die Kameraeinheit (7) untergebracht ist,
einem Abdeckelement (5) zum Verschließen der Öffnung (6) in dem Gehäuse (4), und
einer Antriebseinheit (26), die zur Bewegung der Kameraeinheit (7) zwischen einer Ruheposition und einer Betriebsposition und zur Bewegung des Abdeckelements (5) zwischen einer Schließstellung und einer Offenstellung ausgebildet ist, wobei in der Schließstellung des Abdeckelements (5) die Kameraeinheit (7) in der Ruheposition von außen unzugänglich innerhalb des Gehäuses (4) und hinter dem Abdeckelement (5) angeordnet ist und in der Offenstellung des Abdeckelements (5) die Kameraeinheit (7) in der Betriebsposition angeordnet ist,
wobei ein Schwenkelement (9) bewegbar um eine erste Drehachse (11) gelagert ist und einen ersten Arm (12), welcher mit dem Abdeckelement (5) bewegungsverbunden ist, und einen zweiten Arm (14) aufweist, und
wobei ein um eine zweite Drehachse (17) bewegbar gelagertes Hebelelement (16) mit dem Abdeckelement (5) in Wirkverbindung steht, um die Bewegung des Abdeckelements (5) zu unterstützen,
**dadurch gekennzeichnet, dass**
ein um eine dritte Drehachse (19) gelagertes Führungselement (10) einen ersten Führungsarm (20), der mit dem zweiten Arm (14) des Schwenkelements (9) in Wirkverbindung steht, und einen zweiten Führungsarm (21), der mit der Kameraeinheit (7) bewegungsgekoppelt ist, aufweist, wobei zur Bewegung der Kameraeinheit (7) und zur Bewegung des Abdeckelements (5) die Antriebseinheit (26) an der mit dem zweiten Führungsarm (21) bewegungsgekoppelten Kameraeinheit (7) angreift.

2. Vorrichtung (3) nach Anspruch 1, **dadurch gekennzeichnet, dass** ein Kopplungselement (23) den ersten Führungsarm (20) des Führungselements (10) und den zweiten Arm (14) des Schwenkelements (9) gelenkig miteinander verbindet.

3. Vorrichtung (3) nach Anspruch 2, **dadurch gekennzeichnet, dass** in der Ruheposition der Kameraeinheit (7) das Kopplungselement (23) fluchtend zu dem Führungselement (10) ausgerichtet ist.

4. Vorrichtung (3) nach einem der vorhergehenden Ansprüche, **dadurch gekennzeichnet, dass** ein Bewegungshebel (24) um eine vierte Drehachse (25) bewegbar gelagert ist und mit der Kameraeinheit (7) in Wirkverbindung steht, um die Bewegung der Kameraeinheit (7) zu unterstützen.

5. Vorrichtung (3) nach Anspruch 4, **dadurch gekennzeichnet, dass** die erste Drehachse (11) und die zweite Drehachse (17) mit Bezug auf die Bewegungsrichtung der Kameraeinheit (7) zwischen der dritten Drehachse (19) und der vierten Drehachse (25) angeordnet sind.

6. Vorrichtung (3) nach Anspruch 4 oder 5, **dadurch gekennzeichnet, dass** der zweite Führungsarm (21) hebelförmig ausgebildet ist, wobei der Bewegungshebel (24) und der zweite Führungsarm (21) gleich ausgerichtet sind und parallel zueinander verlaufen.

7. Vorrichtung (3) nach einem der Ansprüche 4 bis 6, **dadurch gekennzeichnet, dass** der erste Arm (12) einen ersten Gelenkpunkt (15) an dem Abdeckelement (5) aufweist und das Hebelelement (16) einen zweiten Gelenkpunkt (18) an dem Abdeckelement (5) aufweist, wobei der Abstand zwischen der ersten Drehachse (11) und der zweiten Drehachse (17) dem Abstand zwischen dem ersten Gelenkpunkt (15) und dem zweiten Gelenkpunkt (18) entspricht.

8. Vorrichtung (3) nach einem der Ansprüche 4 bis 7, **dadurch gekennzeichnet, dass** der Abstand der vierten Drehachse (25) zu dem Abdeckelement (5) kleiner ist als der Abstand der dritten Drehachse (19) zu dem Abdeckelement (5).

9. Vorrichtung (3) nach einem der vorhergehenden Ansprüche, **dadurch gekennzeichnet, dass** der erste Arm (12) in Bezug auf den zweiten Arm (14) abgewinkelt verlaufend ausgebildet ist.

10. Vorrichtung (3) nach einem der vorhergehenden Ansprüche, **dadurch gekennzeichnet, dass** das Schwenkelement (9) einen dritten Arm (34) aufweist, der zu dem ersten Arm (12) parallel versetzt an der ersten Drehachse (11) gelagert ist und der mit dem Abdeckelement (5) bewegungsverbunden ist.

11. Vorrichtung (3) nach Anspruch 10, **dadurch gekennzeichnet, dass** das Hebelelement (16) zwischen dem ersten Arm (12) und dem dritten Arm (34) des Schwenkelements (9) derart angeordnet ist, dass der erste Arm (12), der dritte Arm (34) und das Hebelelement (16) das Abdeckelement (5) an drei Gelenkpunkten lagern.

12. Vorrichtung (3) nach einem der vorhergehenden Ansprüche, **dadurch gekennzeichnet, dass** eine sich entlang einer in dem Gehäuse (4) untergebrachten Spindel (30) bewegende Spindelmutter (31) an der Kameraeinheit (7) fixiert ist, wobei die Antriebseinheit (26) die Spindel (30) antreibt und rotiert.

13. Vorrichtung (3) nach Anspruch 12, **dadurch gekennzeichnet, dass** die Spindel (30) und/oder die Spindelmutter (31) aus einem Kunststoff bestehen.

14. Vorrichtung (3) nach einem der vorhergehenden Ansprüche, **dadurch gekennzeichnet, dass** das Abdeckelement (5) nach Art eines Kurzhubtasters ausgebildet ist.

15. Vorrichtung (3) nach einem der vorhergehenden Ansprüche, **dadurch gekennzeichnet, dass** die Drehachsen (11, 17, 19, 25) an dem Gehäuse (4) ortsfest gelagert sind.

## Claims

1. Device (3) having
a camera unit (7) comprising a lens (8) for capturing images of the surrounding area of a motor vehicle (1),
a housing (4) which comprises at least one opening (6) for the camera unit (7) and in which the camera unit (7) is accommodated,
a cover element (5) for closing the opening (6) in the housing (4), and
a drive unit (26) which is designed for moving the camera unit (7) between a rest position and an operating position and for moving the cover element (5) between a closed position and an open position, the camera unit (7) being arranged in the rest position, within the housing (4) and behind the cover element (5), so as to be inaccessible from the outside, when the cover element (5) is in the closed position, and the camera unit (7) being arranged in the operating position when the cover element (5) is in the open position,
a pivot element (9) being movably mounted about a first rotational axis (11) and comprising a first arm (12), which is connected for movement to the cover element (5), and a second arm (14),
a lever element (16), which is movably mounted about a second rotational axis (17), being operatively connected to the cover element (5) in order to assist the movement of the cover element (5),
**characterized in that**
a guide element (10) which is mounted about a third rotational axis (19) comprises a first guide arm (20) which is operatively connected to the second arm (14) of the pivot element (9), and a second guide arm (21) which is movably connected to the camera unit (7),
in order to move the camera unit (7) and in order to move the cover element (5), the drive unit (26) engaging on the camera unit (7) which is movably connected to the second guide arm (21).

2. Device (3) according to claim 1, **characterized in that** a coupling element (23) hingedly interconnects the first guide arm (20) of the guide element (10) and the second arm (14) of the pivot element (9).

3. Device (3) according to claim 2, **characterized in that**, in the rest position of the camera unit (7), the coupling element (23) is aligned with the guide element (10).

4. Device (3) according to any of the preceding claims, **characterized in that** a motion lever (24) is movably mounted about a fourth rotational axis (25) and is operatively connected to the camera unit (7) in order to assist the movement of the camera unit (7).

5. Device (3) according to claim 4, **characterized in that** the first rotational axis (11) and the second rotational axis (17) are arranged between the third rotational axis (19) and the fourth rotational axis (25) with respect to the movement direction of the camera unit (7).

6. Device (3) according to either claim 4 or claim 5, **characterized in that** the second guide arm (21) is lever-like, the motion lever (24) and the second guide arm (21) having the same orientation and extending so as to be mutually parallel.

7. Device (3) according to any of claims 4 to 6, **characterized in that** the first arm (12) comprises a first hinge point (15) on the cover element (5) and the lever element (16) comprises a second hinge point (18) on the cover element (5), the spacing between the first rotational axis (11) and the second rotational axis (17) corresponding to the spacing between the first hinge point (15) and the second hinge point (18).

8. Device (3) according to any of claims 4 to 7, **characterized in that** the spacing between the fourth rotational axis (25) and the cover element (5) is smaller than the spacing between the third rotational axis (19) and the cover element (5).

9. Device (3) according to any of the preceding claims, **characterized in that** the first arm (12) extends at an angle with respect to the second arm (14).

10. Device (3) according to any of the preceding claims, **characterized in that** the pivot element (9) comprises a third arm (34) which is mounted on the first rotational axis (11) so as to have a parallel offset relative to the first arm (12) and is movably connected to the cover element (5).

11. Device (3) according to claim 10, **characterized in that** the lever element (16) is arranged between the first arm (12) and the third arm (34) of the pivot element (9) such that the cover element (5) is mounted on the first arm (12), the third arm (34) and the lever element (16) at three hinge points.

12. Device (3) according to any of the preceding claims, **characterized in that** a spindle nut (31), which moves along a spindle (30) accommodated in the housing (4), is fixed to the camera unit (7), the drive unit (26) driving and rotating the spindle (30).

13. Device (3) according to claim 12, **characterized in that** the spindle (30) and/or the spindle nut (31) consist of a plastics material.

14. Device (3) according to any of the preceding claims, **characterized in that** the cover element (5) is designed in the manner of a tactile switch.

15. Device (3) according to any of the preceding claims, **characterized in that** the rotational axis (11, 17, 19, 25) are mounted on the housing (4) so as to be stationary.

## Revendications

1. Dispositif (3) comprenant
une unité caméra (7) avec un objectif (8) pour la saisie d'images de la zone extérieure d'un véhicule automobile (1),
un boîtier (4), lequel comporte au moins une ouverture (6) pour l'unité caméra (7) et dans lequel est logée l'unité caméra (7),
un élément de recouvrement (5) pour fermer l'ouverture (6) dans le boîtier (4), et
une unité d'entraînement (26), qui est constituée pour déplacer l'unité caméra (7) entre une position de repos et une position de fonctionnement et pour déplacer l'élément de recouvrement (5) entre une position de fermeture et une position d'ouverture, sachant que dans la position de fermeture de l'élément de recouvrement (5), l'unité caméra (7) est disposée dans la position de repos à l'intérieur du boîtier (4) de façon inaccessible de l'extérieur et derrière l'élément de recouvrement (5) et dans la position d'ouverture de l'élément de recouvrement (5), l'unité caméra (7) est disposée dans la position de fonctionnement,
sachant qu'un élément pivotant (9) est logé pouvant se déplacer autour d'un premier axe de rotation (11) et comporte un premier bras (12), lequel est relié en mouvement à l'élément de recouvrement (5), et un deuxième bras (14), et
sachant qu'un élément levier (16) logé pouvant se déplacer autour d'un deuxième axe de rotation (17) se trouve en liaison fonctionnelle avec l'élément de recouvrement (5) pour assister le déplacement de l'élément de recouvrement (5),
**caractérisé en ce**
**qu'**un élément de guidage (10) logé autour d'un troisième axe de rotation (19), comporte un premier bras de guidage (20), qui est en liaison fonctionnelle avec le deuxième bras (14) de l'élément pivotant (9), et un deuxième bras de guidage (21), qui est couplé en mouvement à l'unité caméra (7),
sachant que pour déplacer l'unité caméra (7) et pour déplacer l'élément de recouvrement (5), l'unité d'entraînement (26) vient en prise sur l'unité caméra (7) couplée en mouvement au deuxième bras de guidage (21).

2. Dispositif (3) selon la revendication 1, **caractérisé en ce qu'**un élément d'accouplement (23) relie entre eux de façon articulée le premier bras de guidage (20) de l'élément de guidage (10) et le deuxième bras (14) de l'élément pivotant (9).

3. Dispositif (3) selon la revendication 2, **caractérisé en ce que** dans la position de repos de l'unité caméra (7), l'élément d'accouplement (23) est orienté en alignement par rapport à l'élément de guidage (10).

4. Dispositif (3) selon l'une quelconque des revendications précédentes, **caractérisé en ce qu'**un levier de déplacement (24) est logé pouvant se déplacer autour d'un quatrième axe de rotation (25) et se trouve en liaison fonctionnelle avec l'unité caméra (7) pour assister le déplacement de l'unité caméra (7).

5. Dispositif (3) selon la revendication 4, **caractérisé en ce que** le premier axe de rotation (11) et le deuxième axe de rotation (17) sont disposés entre le troisième axe de rotation (19) et le quatrième axe de rotation (25) par rapport à la direction de déplacement de l'unité caméra (7).

6. Dispositif (3) selon la revendication 4 ou 5, **caractérisé en ce que** le deuxième bras de guidage (21) est constitué sous la forme d'un levier, sachant que le levier de déplacement (24) et le deuxième bras de guidage (21) sont orientés de la même manière et passent parallèlement l'un par rapport à l'autre.

7. Dispositif (3) selon l'une quelconque des revendications 4 à 6, **caractérisé en ce que** le premier bras (12) comporte un premier point d'articulation (15) sur l'élément de recouvrement (5) et l'élément levier (16) comporte un deuxième point d'articulation (18) sur l'élément de recouvrement (5), sachant que la distance entre le premier axe de rotation (11) et le deuxième axe de rotation (17) correspond à la distance entre le premier point d'articulation (15) et le deuxième point d'articulation (18).

8. Dispositif (3) selon l'une quelconque des revendications 4 à 7, **caractérisé en ce que** la distance entre le quatrième axe de rotation (25) et l'élément de recouvrement (5) est plus petite que la distance entre le troisième axe de rotation (19) et l'élément de recouvrement (5).

9. Dispositif (3) selon l'une quelconque des revendications précédentes, **caractérisé en ce que** le premier bras (12) est constitué en configuration coudée par rapport au deuxième bras (14).

10. Dispositif (3) selon l'une quelconque des revendications précédentes, **caractérisé en ce que** l'élément pivotant (9) comporte un troisième bras (34) qui est logé décalé parallèlement par rapport au premier bras (12) sur le premier axe de rotation (11) et qui est relié en mouvement à l'élément de recouvrement (5).

11. Dispositif (3) selon la revendication 10, **caractérisé en ce que** l'élément levier (16) est disposé entre le premier bras (12) et le troisième bras (34) de l'élément pivotant (9) de telle manière que le premier bras (12), le troisième bras (34) et l'élément levier (16) supportent l'élément de recouvrement (5) sur trois points d'articulation.

12. Dispositif (3) selon l'une quelconque des revendications précédentes, **caractérisé en ce qu'**un écrou de broche (31) se déplaçant le long d'une broche (30) logée dans le boîtier (4) est fixé sur l'unité caméra (7), sachant que l'unité d'entraînement (26) entraîne et fait tourner la broche (30).

13. Dispositif (3) selon la revendication 12, **caractérisé en ce que** la broche (30) et/ou l'écrou de broche (31) sont faits d'une matière plastique.

14. Dispositif (3) selon l'une quelconque des revendications précédentes, **caractérisé en ce que** l'élément de recouvrement (5) est constitué à la manière d'une touche à faible course.

15. Dispositif (3) selon l'une quelconque des revendications précédentes, **caractérisé en ce que** les axes de rotation (11, 17, 19, 25) sont logés fixement sur le boîtier (4).
